# EUROPEAN PATENT APPLICATION

(11) **EP 1 264 872 A1**
(43) Date of publication of application: **11.12.2002**
(21) Application number: 01912160.7
(22) Date of filing: 07.03.2001
(51) Int. Cl.: C09K 11/06

(54) **FLUORESCENT MATERIAL OF CYCLIC PHENOL SULFIDE ASSOCIATED WITH METAL AND COMPOSITION THEREOF**

(30) Priority: 09.03.2000 JP 2000064446
(71) Applicant: COSMO OIL CO., LTD, Tokyo 105-0023 (JP)
(72) Inventor: MIYANO, Sotaro, Sendai-shi, Miyagi 982-0222 (JP); IKI, Nobuhiko, 1-14, Kameoka Jutaku Daiichichiku, Sendai-shi,Miyagi 980-0865 (JP); TAKEYA, Haruhiko, c/o Cosmo Research Institute, Satte-shi, Saitama 340-0112 (JP); MIYANARI, Setsuko, Cosmo Research Institute, Satte-shi, Saitama 340-0112 (JP); KUMAGAI, Hitoshi, c/o Cosmo Research Institute, Satte-shi, Saitama 340-0112 (JP)
(74) Representative: HOFFMANN - EITLE
(86) International application number: JP0101782
(87) International publication number: WO01066667

(57) **Abstract**

A fluorescent material comprising an associate of a cyclic phenol sulfide selected from thiacarixarene, sulfinylated thiacarixarene and sulfonylated thiacarixarene represented by formula (1): 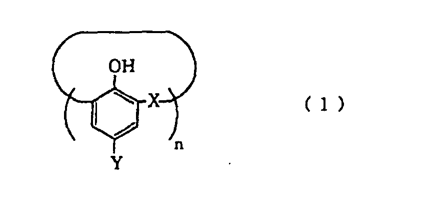 (wherein X represents S, SO, or SO₂; n is an integer of 4 to 6; Y represents a hydrogen atom, a hydrocarbon group, a halogenated hydrocarbon group, -COR¹, -OR², -COOR³, -CN, -CONH₂, -NO₂, -NR⁴R⁵, a halogen atom, -SO₄R⁶ or -SO₃R⁷; R¹ to R⁵ each represents a hydrogen atom or a hydrocarbon group; R⁶ and R⁷ each represents a hydrogen atom, a hydrocarbon group or a metal; and plural Y's are the same or different) with a rare earth metal ion, and a fluorescent material composition comprising the fluorescent material dispersed or dissolved in a medium.

## Description

### TECHNICAL FIELD

The present invention relates to a fluorescent material useful as optical materials, dyes, starting material for luminescent devices, and the like.

### BACKGROUND ART

Fluorescent materials are useful as starting materials for optical products, dyes, starting material for luminescent devices, and the like, but the ranges of luminescent wavelength and excitation wavelength are limited depending on the materials, so that a novel material capable of applying to a wide range of excitation wavelength and development thereof have been desired.

Moreover, there have been recently developed display devices, such as plasma display, which necessitate the conversion of a minute amount of ultraviolet light to visible light in a micro reaction field, so that the development of an organic fluorescent material capable of controlling the arrangement and luminescence in a molecular basis.

At the present, rare earth oxides, which are inorganic compositions, are utilized as fluorescent materials.

However, although the conventional fluorescent materials are inexpensive and stable and hence are easy to utilize, they are difficult to pulverize into a molecular level, so that it is difficult to apply them to a definite microdevice by means of physical pulverization.

### DISCLOSURE OF THE INVENTION

An object of the present invention is to provide a fluorescent material capable of converting a minute amount of ultraviolet light to fluorescence in a micro reaction field and controlling the arrangement and fluorescent luminescence in a molecular basis.

The present inventors have extensively studied the chemical structures of cyclic phenol sulfides and the affinity to metals, metal species, and spectroscopic behavior. As a result, they have found that an associate of a cyclic phenol sulfide having a specific chemical structure with a rare earth metal ion exhibits a remarkable fluorescent luminescence, and thus, accomplished the present invention.

The present invention relates to the following (1) to (3):
(1) A fluorescent material comprising an associate of
   a cyclic phenol sulfide selected from thiacarixarene, sulfinylated thiacarixarene and sulfonylated thiacarixarene represented by formula (1): 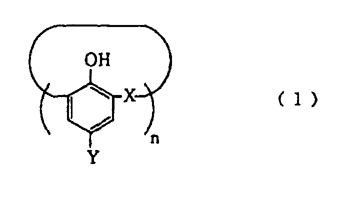 wherein X represents S, SO, or SO₂; n represents an integer of 4 to 6; Y represents a hydrogen atom, a hydrocarbon group, a halogenated hydrocarbon group, -COR¹, -OR², -COOR³, -CN, -CONH₂, -NO₂, -NR⁴R⁵, a halogen atom, -SO₄R⁶ or -SO₃R⁷; R¹ to R⁵ each represents a hydrogen atom or a hydrocarbon group; R⁶ and R⁷ each represents a hydrogen atom, a hydrocarbon group or a metal; and plural Y's are the same or different,
   with a rare earth metal ion.
(2) A fluorescent material composition comprising the fluorescent material according to (1) dispersed or dissolved in a medium.
(3) The composition according to (2), wherein the medium is water.

### BRIEF DESCRIPTION OF THE DRAWINGS

Fig. 1 shows an ultraviolet absorption spectrum of an aqueous solution of sodium thiacarix[4]arenesulfonate/Tb.
Fig. 2 shows a fluorescence spectrum of an aqueous solution of sodium thiacarix[4]arenesulfonate/Tb.
Fig. 3 shows an ultraviolet absorption spectrum of an aqueous solution of sodium sulfonylated thiacarix[4]arenesulfonate/Tb.
Fig. 4 shows a fluorescence spectrum of an aqueous solution of sodium sulfonylated thiacarix[4]arenesulfonate/Tb.

### BEST MODE FOR CARRYING OUT THE INVENTION

The present invention are explained below in detail.

JP-A-11-179104 discloses that a cyclic phenol sulfide having a cage skeleton exhibits a strong affinity to a metal ion based on a systematic synthetic study of phenol sulfides.

The fluorescent material of the present invention is an associate of a cyclic phenol sulfide of formula (1) as a light energy-trapping site with a rare earth metal ion.

Y represents a hydrogen atom, a hydrocarbon group, a halogenated hydrocarbon group, -COR¹, -OR², -COOR³, -CN, -CONH₂, -NO₂, -NR⁴R⁵, a halogen atom, -SO₄R⁶ or -SO₃R⁷, and plural Y's are the same or different.

Examples of the hydrocarbon group include an alkyl group such as methyl, ethyl, n-propyl, isopropyl, n-butyl, isobutyl, *tert*-butyl, n-pentyl, isopentyl, neopentyl, *tert*-pentyl, 2-methylbutyl, n-hexyl, isohexyl, 3-methylpentyl, ethylbutyl, n-heptyl, 2-methylhexyl, n-octyl, isooctyl, *tert*-octyl, 2-ethylhexyl, 3-methylheptyl, n-nonyl, isononyl, 1-methyloctyl, ethylheptyl, n-decyl, 1-methylnonyl, n-undecyl, 1,1-dimethylnonyl, n-dodecyl, n-tetradecyl, n-heptadecyl, n-octadecyl, *etc.*; a hydrocarbon group derived from a polymer or copolymer of ethylene, propylene or butylene; and the like.

Examples of the hydrocarbon group which is unsaturated aliphatic include alkenyl and alkynyl groups such as vinyl, allyl, isopropenyl, 2-butenyl, 2-methylallyl, 1,1,-dimetylallyl, 3-methyl-2-butenyl, 3-methyl-3-butenyl, 4-pentenyl, hexenyl, octenyl, nonenyl, decenyl, *etc.*; a hydrocarbon group derived from a polymer or copolymer of acetylene, butadiene or isoprene; and the like.

Examples of the hydrocarbon group which is alicyclic include cycloalkyl, cycloalkenyl and cycloalkynyl groups such as cyclopropyl, cyclobutyl, cyclopentyl, cyclohexyl, cycloheptyl, cyclooctyl, 3-methylcyclohexyl, 4-methylcyclohexyl, 4-ethylcyclohexyl, 2-methylcyclooctyl, cyclopropenyl, cyclobutenyl, cyclopentenyl, cyclohexenyl, cyclooctenyl, 4-methylcyclohexenyl, 4-ethylcyclohexenyl, *etc.*; and the like.

Examples of the hydrocarbon group which is alicyclic-aliphatic include alkyl, alkenyl and alkynyl groups substituted with a cycloalkyl, cycloalkenyl or cycloalkynyl group or the like, such as cyclopropylethyl, cyclobutylethyl, cyclopentylethyl, cyclohexylmethyl, cyclohexylethyl, cycloheptylmethyl, cyclooctylehtyl, 3-methylcyclohexylpropyl, 4-methylcyclohexylethyl, 4-ethylcyclohexylethyl, 2-methylcyclooctylethyl, cyclopropenylbutyl, cyclobutenbylethyl, cyclopentenylethyl, cyclohexenylmethyl, cycloheptenylmethyl, cyclooctenylethyl, 4-methylcyclohexenylpropyl, 4-ethylcyclohexenylpentyl, *etc.*; and the like.

Examples of the hydrocarbon group which is aromatic include an aryl group such as phenyl, naphthyl, *etc.*; alkylaryl, alkenylaryl and alkynylaryl groups such as 4-methylphenyl, 3,4-dimethylphenyl, 3,4,5-trimethylphenyl, 2-ethylphenyl, n-butylphenyl, *tert*-butylphenyl, amylphenyl, hexylphenyl, nonylphenyl, 2-*tert*-butyl-5-methylphenyl, cyclohexylphenyl, cresyl, oxyethylcresyl, 2-methoxy-4-*tert*-butylphenyl, dodecylphenyl, *etc.*; and the like. The alkyl moiety of the alkylaryl group, the alkenyl moiety of the alkenylaryl group and the alkynyl moiety of the alkynylaryl group may be have a cyclic structure.

Examples of the hydrocarbon group which is aromatic-aliphatic include aralkyl, aralkenyl and aralykynyl groups such as benzyl, 1-phenylethyl, 2-phenylethyl, 2-phenylpropyl, 3-phenylpropyl, 4-phenylbutyl, 5-phenylpentyl, 6-phenylhexyl, 1-(4-methylphenyl)ethyl, 2-(4-methylphenyl)ethyl, 2-methylbenzyl, 1,1-dimethyl-2-phenylethyl, *etc*.; and the like. The alkyl moiety of the aralkyl group, the alkenyl moiety of the aralkenyl group and the alkynyl moiety of the aralykynyl group may be have a cyclic structure.

Preferred examples of the halogenated hydrocarbon group include the above hydrocarbon groups substituted with halogen, and the halogen may be any of fluorine, chlorine, bromine and iodine.

The halogen atom may be any of fluorine, chlorine, bromine and iodine.

R¹ to R⁵ each represents a hydrogen atom or a hydrocarbon group, and R⁶ and R⁷ each represents a hydrogen atom, a hydrocarbon group or a metal. As the hydrocarbon groups, the above hydrocarbon groups can be used.

In formula (1), the metal of R⁶ or R⁷, i.e., the metal of a metal sulfate or metal sulfonate of Y, is not particularly limited but an alkali metal is preferred. Examples of the alkali metal include sodium, potassium, rubidium, cesium, francium and the like, but sodium is preferred. Moreover, in formula (1), n is an integer of 4 to 6, but is preferably 4.

The cyclic phenol sulfide of formula (1) is a thiacarixarene wherein X is S in formula (1), a sulfinylated thiacarixarene wherein X is SO in formula (1), or a sulfonylated thiacarixarene wherein X is SO₂ in formula (1). The processes for producing them are not particularly limited, and they can be produced based on the thiacarixarene and the hydrocarbon-removing method and the sulfonylation method described in JP-A-9-227553, optionally in combination with the sulfinylation or sulfonylation method described in WO 98/09959. Also, a method of conducting dealkylation and sulfonylation in one step has been developed (WO 99/29683), and a more convenient production can be achieved by adopting the method.

In the present invention, the cyclic phenol sulfide of formula (1) may be used alone or in combination of two or more of them.

A metal ion that is another component of the associate is a rare metal ion. Examples of the rare metal ion include ions of scandium, yttrium, lanthanum, cerium, praseodymium, neodymium, promethium, samarium, europium, gadolinium, terbium, dysprosium, holmium, erbium, thulium, ytterbium, lutetium and the like.

The starting material of the rare metal ion is, for example, a salt of the metal cation and a counter anion, and a commercially available hydrochloride, sulfonate, nitrate, and the like may be appropriately utilized.

The above associate can be obtained by mixing a cyclic phenol sulfide or ion thereof with a rare metal ion. For example, a solution in which a cyclic phenol sulfide has been dissolved is brought into contact with a solution in which a rare metal ion has been dissolved, so that it is possible to migrate the rare metal ion into the solution of the cyclic phenol sulfide. Specifically, a cyclic phenol sulfide of formula (1) is dissolved in an organic solvent such as chloroform, and an aqueous solution containing a metal ion is added thereto, followed by stirring. The solution concentration is not particularly limited but the concentration of the cyclic phenol sulfide of formula (1) is suitably in the range of saturated concentration to 10⁻¹⁰ M in view of efficiency. With regard to the concentration of the metal ion, the reaction is operable in the concentration range similar to the above, but the initial concentration is preferably 1/10 or more, more preferably 1/5 or more of the concentration of the cyclic phenol sulfide of formula (1) in view of reaction efficiency. Moreover, standard ratio of the total amount of each substance to be mixed is 1 : 1 (molar ratio), and although the excess component does not function as the fluorescent material of the present invention, coexistence thereof causes no trouble. For efficient production, it is preferable to employ a method wherein the preparation is conducted under the condition of an excess metal ion and then the excess amount of the metal remaining in the aqueous layer is recovered. In this method, the molar ratio is preferably from 1 to 100 mol, more preferably from 1 to 50 mol per mol of the cyclic phenol sulfide of formula (1).

Furthermore, other than the method, it is also possible to employ a method wherein these compounds are mixed in a homogeneous solution system. When they are mixed in a homogeneous solution system, the concentration and temperature are not particularly limited but it is preferable to mix them under such conditions that an excess rare metal ion is present relative to the cyclic phenol sulfide and specifically, the reaction is operable when the concentration is 10⁻⁹ M or more. Moreover, the coexistence of a water-soluble organic solvent is also possible at that time, and specifically, in addition to N,N'-dimethylformamide, dimethyl sulfoxide, and acetonitrile, alcohol such as methanol ethanol or propanol and a ketone such as acetone or methyl ethyl ketone can be co-present.

The order of the mixing is not particularly limited and a solution of a rare metal ion and a solution of a cyclic phenol sulfide may be simply mixed. The mixing may be conducted at once or separately several times.

Moreover, in this case, with regard to the molar ratio of the rare metal ion to the cyclic phenol sulfide, 1 : 1 is a theoretical mixing ratio and, in the case that one component is present in excess, the excess component does not contribute to the luminescence. Practically, there arises no trouble in the molar ratio of 1.0 : 0.3 to 0.3 : 1.0 and preferred is the range of 1.0 : 0.5 to 0.5 : 1.0 in view of the component loss or the like.

The fluorescent material composition of the present invention contains a medium in addition to the associate of the metal ion and the cyclic phenol sulfide. The medium includes water, organic solvents, and the like and water is preferred. Also, water may contain an organic solvent. The organic solvent includes alcohols such as methanol, ethanol, n-propanol, isopropanol, *etc.*; ketones such as acetone, methyl ethyl ketone, *etc.*; aprotic polar organic solvents such as dimethyl sulfoxide, N,N'-dimethylformamide, tetrahydrofuran, acetonitrile, 1,4-dioxane, *etc.*; halogenated solvents such as dichloromethane, chloroform, 1,2-dichloroethane, chlorobenzene, *etc.*; ester solvents such as ethyl acetate, methyl acetate, *etc.*; and aromatic solvents such as benzene, toluene, *etc.* The organic solvents may be used alone or as a mixture of two or more of them.

In the fluorescent material composition of the present invention, the concentration of the associate is preferably 10⁻⁹ M or more, and practically, 10⁻⁵ M or more is preferred. There is no upper limitation in the preferred concentration, and even a saturated concentration can be applicable. Also, supersaturation conditions or the use of precipitate as a solid after filtration and recovery arises no trouble.

As the fluorescent material composition of the present invention, the associate solution obtainable by the above process can be employed as it is.

Moreover, the fluorescent material composition of the present invention may contain other additive such as a buffer or the like.

When the fluorescent material of the present invention is employed in a solution state as a liquid material, it is preferable to adjust the pH by adding a buffer solution for the purpose of stabilizing the luminescence property. The usable pH range is from pH 5 to 14 when thiacarixarene is used, and it is from pH 8 to 14 when sulfinylated thiacarixarene or sulfonylated thiacarixarene is used.

When the material of the present invention is employed as a solid, the above mixed solution can be separated and most conveniently, it may be concentrated to dryness.

The present invention is explained in further detail with reference to Production Examples and Examples, but the present invention is not limited to these examples.

### Production Example 1

### Synthesis of 5,11,17,23-tetra-tert-butyl-25,26,27,28-tetrahydroxy-2,8,14,20-tetrathia[1.9.3.1.1^{3,7}1^{9,13}1^{15,19}]-octacosa-1(25),3,5,7(28),9,11,13(27),15,17,19(26),21,23-dodecaene (I):

To 45.2 g of 4-*tert*-butylphenol were added 14.4 g elemental sulfur, 3.0 g of sodium hydroxide and 7.60 g of tetraethylene glycol dimethyl ether, followed by gradually heating up to 230°C over 4 hours under stirring in an atmosphere of nitrogen, and followed by stirring for further 2 hours. During the reaction, water and a hydrogen sulfide generated by the reaction were removed. The reaction mixture was cooled to room temperature, dissolved in 500 ml of ether added, and hydrolyzed with 1 N aqueous sulfuric acid solution. A separated ether layer was washed with water and dried with magnesium sulfate. The reaction mixture obtained by evaporation of ether was further fractionized by silica gel column chromatography (hexane/chloroform) to thereby obtain a crude product. The crude product was recrystallized from chloroform/acetone to thereby obtain 26.5 g of 5,11,17,23-tetra-*tert*-butyl-25,26,27,28-tetrahydroxy-2,8,14,20-tetrathia[1.9.3.1.1^{3,7}1^{9,13}1^{15,19}]octacosa-1(25),3,5,7(28),9,11,13(27),15,17,19(26),21,23-dodecaene as colorless transparent crystals. The yield was 45%.

### Production Example 2

### Synthesis of sodium 25,26,27,28-tetrahydroxy-2,8,14,20-tetrathia[1.9.3.1.1^{3,7}1^{9,13}1^{15,19}]octacosa-1(25),3,5,7(28),9,11,13(27),15,17,19(26),21,23-dodecaene-5,11,17,23-tetrasulfonate

Into a reflux condenser-attached 30 ml eggplant-shaped flask were added 10.0 g (13.9 mmol) of 5,11,17,23-tetra-*tert*-butyl-25,26,27,28-tetrahydroxy-2,8,14,20-tetrathia[1.9.3.1.1^{3,7}1^{9,13}1^{15,19}]octacosa-1(25),3,5,7(28),9,11,13(27),15,17,19(26),21,23-dodecaene and 100 ml of 95% concentrated sulfuric acid, and the mixture was suspended and heated to 90°C to allow to react for 24 hours. The reaction mixture was cooled with water and then filtered using a glass filter. The filtrate was diluted with 50 ml of purified water and unreacted starting material was filtered off. Then, salting-out was conducted by adding 20 g of sodium chloride to the filtrate, whereby a pale yellow powder (9.7 g, yield 77.3%) was obtained. The powder was washed with ethanol and then recrystallized from water to thereby obtain 8.68 g of sodium 25,26,27,28-tetrahydroxy-2,8,14,20-tetrathia[1.9.3.1.1^{3,7}1^{9,13}1^{15,19}]-octacosa-1(25),3,5,7(28),9,11,13(27),15,17,19(26),21,23-dodecaene-5,11,17,23-tetrasulfonate as a white powder. The yield was 69.2%. The results of NMR analysis of the product are shown below.
¹H-NMR (D₂O, 400 MHz): δ ppm (from DDS) 7.97 (s, 8H, ArH) ¹³C-NMR (D₂O, 400 MHz): δ ppm (from CH₃CN) 117.06, 132.69, 133.24, 155.68 (Ar)

### Production Example 3

### Synthesis of 5,11,17,23-tetra-tert-butyl-25,26,27,28-tetrahydroxy-2,8,14,20-tetrasulfonyl[1.9.3.1.1^{3,7}1^{9,13}1^{15,19}]octacosa-1(25),3,5,7(28),9,11,13(27),15,17,19(26),21,23-dodecaene

In a 10 ml eggplant-shaped flask fitted with a reflux condenser, 1.0 g (1.38 mmol) of 5,11,17,23-tetra-*tert*-butyl-25,26,27,28-tetrahydroxy-2,8,14,20-tetrathia[1.9.3.1.1^{3,7}1^{9,13}1^{15,19}]octacosa-1(25),3,5,7(28),9,11,13(27),15,17,19(26),21,23-dodecaene was dissolved in 30 ml of chloroform. Then, 50 ml of acetic acid and 2.0 g (13.0 ml) of sodium perborate were added thereto, followed by stirring at 50°C for 18 hours. After cooling, the product was extracted from the resulting reaction solution with chloroform (50 ml × 3). The chloroform layer was washed with 2 N hydrochloric acid and then dried over anhydrous magnesium sulfate. Chloroform was removed by evaporation to thereby obtain a white powder, which was recrystallized from benzene-methanol to thereby obtain 1.06 g of 5,11,17,23-tetra-*tert*-butyl-25,26,27,28-tetrahydroxy-2,8,14,20-tetrasulfonyl[1.9.3.1.1^{3,7}1^{9,13}1^{15,19}]octacosa-1(25),3,5,7(28),9,11,13(27),15,17,19(26),21,23-dodecaene. The yield was 90.0%. The results of NMR analysis of the product are show below.
¹H-NMR (D₂O, 400 MHz): δ ppm (from DDS) 8.05 (s, 8H, ArH), 1.28 (s, 36H, tert-Butyl)
¹³C-NMR (D₂O, 400 MHz): δ ppm (from CH₃CN) 155.8, 143.3, 133.6, 128.9 (Ar), 34.9 (C-(CH₃)₃), 31.2 (C-(CH₃)₃)

### Production Example 4

### Synthesis of sodium 25,26,27,28-tetrahydroxy-2,8,14,20-tetrasulfonyl[1.9.3.1.1^{3,7}1^{9,13}1^{15,19}]octacosa-1(25),3,5,7(28),9,11,13(27),15,17,19(26),21,23-dodecaene-5,11,17,23-tetrasulfonate

Into a reflux condenser-attached eggplant-shaped flask were added 200 mg (0.221 mmol) of sodium 25,26,27,28-tetrahydroxy-2,8,14,20-tetrathia[1.9.3.1.1^{3,7}1^{9,13}1^{15,19}]-octacosa-1(25),3,5,7(28),9,11,13(27),15,17,19(26),21,23-dodecaene-5,11,17,23-tetrasulfonate and 1 ml of aqueous hydrogen peroxide, and then 2 ml of trifluoroacetic acid was added dropwise thereto over 1 hour. After the addition, the mixture was stirred at room temperature for 8 hours. Acetone was added to the resulting reaction mixture and the precipitated solid matter was recovered by filtration. The solid was recrystallized from acetone-water to thereby obtain 187.7 mg of white sodium 25,26,27,28-tetrahydroxy-2,8,14,20-tetrasulfonyl[1.9.3.1.1^{3,7}1^{9,13}1^{15,19}]octacosa-1(25),3,5,7(28),9,11,13(27),15,17,19(26),21,23-dodecaene-5,11,17,23-tetrasulfonate. The yield was 80.5%. The results of NMR analysis of the product are shown below.
¹H-NMR (D₂O, 400 MHz): δ ppm (from DDS) 8.32 (s, 8H, ArH) ¹³C-NMR (D₂O, 400 MHz): δ ppm (from CH₃CN) 128.89, 134.29 (Ar)

### Production Example 5

### Synthesis of 5,11,17,23-tetra-tert-butyl-25,26,27,28-tetrahydroxy-2,8,14,20-tetrasulfinyl[1.9.3.1.1^{3,7}1^{9,13}1^{15,19}]octacosa-1(25),3,5,7(28),9,11,13(27),15,17,19(26),21,23-dodecaene.

A solution of 5.7 g of 30% aqueous hydrogen peroxide which had been dissolved in 100 ml of glacial acetic acid beforehand was added dropwise to a solution of 1.8 g of 5,11,17,23-tetra-*tert*-butyl-25,26,27,28-tetrahydroxy-2,8,14,20-tetrathia[1.9.3.1.1^{3,7}1^{9,13}1^{15,19}]octacosa-1(25),3,5,7(28),9,11,13(27),15,17,19(26),21,23-dodecaene dissolved in 30 ml of chloroform at room temperature over 30 minutes, followed by stirring at room temperature for further 24 hours. To the resulting reaction solution was added 150 ml of ion-exchanged water, and the product was extracted with chloroform (500 ml × 3). Then, the chloroform layer was washed three times with ion-exchanged water. The chloroform solution was dried over anhydrous magnesium sulfate and then filtered, and the filtrate was concentrated and dried using an evaporator. Then, 522 mg of the resulting white powder was washed with methanol to thereby obtain 485 mg of white 5,11,17,23-tetra-*tert*-butyl-25,26,27,28-tetrahydroxy-2,8,14,20-tetrasulfinyl[1.9.3.1.1^{3,7}1^{9,13}1^{15,19}]octacosa-1(25),3,5,7(28),9,11,13(27),15,17,19(26),21,23-dodecaene. The yield was 25%. The results of analysis of the product are shown below.
Melting point: 210°C (decomposed)
¹H-NMR: (δ, ppm, Cl₂CDCDCl₂) 9.20 (s, 4H, OH), 7.61 (s, 8H, ArH), 1.26 (s, 36H, C(CH₃)₃)
¹³C-NMR: (δ, ppm, Cl₂CDCDCl₂) 152.7, 142.4, 130.2, 128.0, 124.2, 122.8 (Ar), 34.8 (C(CH₃)₃), 31.4 (C(CH₃)₃)
FT-IR: (cm⁻¹, KBr) 3074 (br, OH), 2960 (s, CH₃), 1051, 998 (s, SO)
MS (m/z): 785 (M⁺+1)

| Elemental analysis (%): | |
|---|---|
| Calculated for C₄₀H₄₈S₄O₄ | C, 61.20; H, 6.16; S, 16.34 |
| Found | C, 61.1; H, 6.3; S, 15.9 |

### Example 1

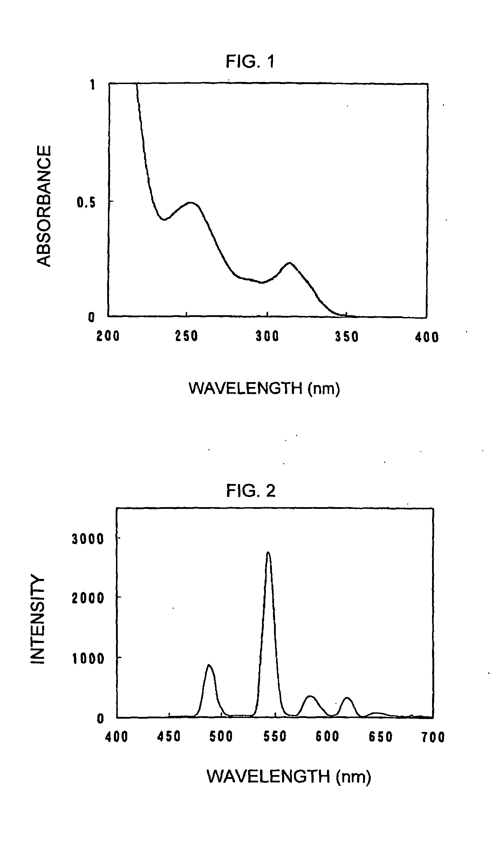

To a measuring flask were added 50 µl of 5×10⁻³ M aqueous sodium thiacarix[4]arenesulfonate solution, 100 µl of 5×10⁻³ M aqueous TbCl₃ solution, and 25 µl of a buffer, and the mixture was diluted with ion-exchanged water to give a total volume of 25 ml. The pH of the aqueous solution at that time was 9.6. The ultraviolet absorption spectrum of the aqueous solution was shown in Fig. 1 and the fluorescence spectrum at the excitation wavelength of 261 nm in Fig. 2. As is apparent from the spectrum, a remarkable fluorescent luminescence was observed, the maximum being at 543 nm.

### Example 2

The experiment was carried out in the same manner as in Example 1, except that TbCl₃ was replaced with Tb(NO₃)₃. At the excitation wavelength of 261 nm, a remarkable fluorescent luminescence was observed, the maximum being at 543 nm.

### Example 3

The experiment was carried out in the same manner as in Example 1, except that TbCl₃ was replaced with DyCl₃. At the excitation wavelength of 261 nm, a remarkable fluorescent luminescence was observed, the maximum being at 572 nm.

### Example 4

The experiment was carried out in the same manner as in Example 1, except that TbCl₃ was replaced with SmCl₃. At the excitation wavelength of 261 nm, a remarkable fluorescent luminescence was observed, the maximum being at 598 nm and 640 nm.

### Example 5

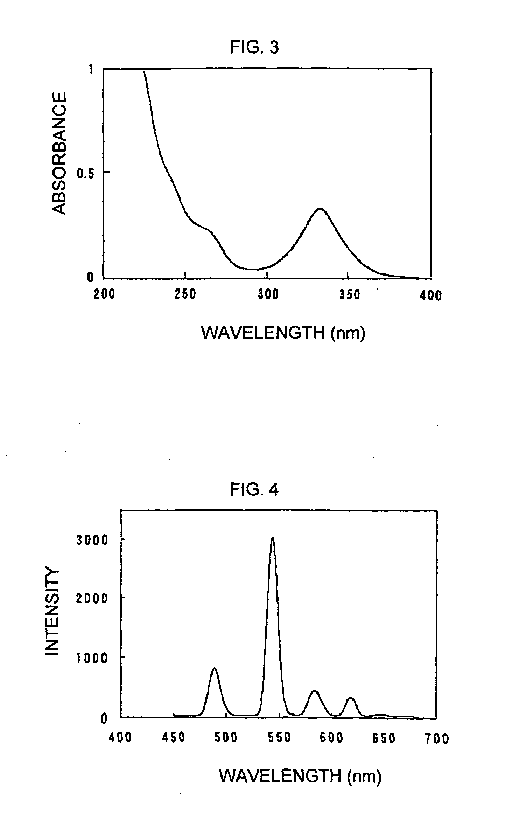

The experiment was carried out in the same manner as in Example 1, except that sodium sulfonylated thiacarix[4]arenesulfonate was used instead of sodium thiacarix[4]arenesulfonate. The ultraviolet absorption spectrum of the solution was shown in Fig. 3 and the fluorescence spectrum at the excitation wavelength of 261 nm in Fig. 4. At the excitation wavelength of 330 nm, a remarkable fluorescent luminescence was observed, the maximum being at 543 nm.

### Example 6

The experiment was carried out in the same manner as in Example 1, except that sodium sulfinylated thiacarix[4]arenesulfonate was used instead of sodium thiacarix[4]arenesulfonate. Upon the measurement of the fluorescent luminescence of the solution at the excitation wavelength of 261 nm, a remarkable fluorescent luminescence was observed, the maximum being at 543 nm.

### Comparative Example 1

The experiment was carried out in the same manner as in Example 1, except that sodium carix[4]arenesulfonate was used instead of sodium thiacarix[4]arenesulfonate. No fluorescent luminescence was observed.

### Comparative Example 2

The experiment was carried out in the same manner as in Example 1, except that the aqueous solution was adjusted to be pH 13. At the excitation wavelength of 261 nm, a fluorescent luminescence was observed, the maximum being at 543 nm but the strength was 1/2 of the strength in Example 1.

### INDUSTRIAL APPLICABILITY

According to the process of the present invention, a highly efficient fluorescent molecular device capable of utilizing in a molecular basis is obtained and it can be effectively utilized as a material for display devices and the like.

## Claims

1. A fluorescent material comprising an associate of
a cyclic phenol sulfide selected from thiacarixarene, sulfinylated thiacarixarene and sulfonylated thiacarixarene represented by formula (1): 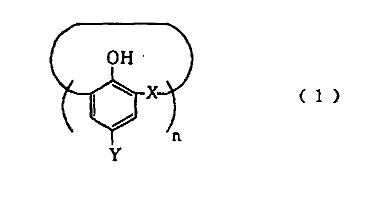 wherein X represents S, SO, or SO₂; n represents an integer of 4 to 6; Y represents a hydrogen atom, a hydrocarbon group, a halogenated hydrocarbon group, -COR¹, -OR², -COOR³, -CN, -CONH₂, -NO₂, -NR⁴R⁵, a halogen atom, -SO₄R⁶ or -SO₃R⁷; R¹ to R⁵ each represents a hydrogen atom or a hydrocarbon group; R⁶ and R⁷ each represents a hydrogen atom, a hydrocarbon group or a metal; and plural Y's are the same or different,
with a rare earth metal ion.

2. A fluorescent material composition comprising the fluorescent material according to claim 1 dispersed or dissolved in a medium.

3. The composition according to claim 2, wherein the medium is water.
